# EUROPEAN PATENT SPECIFICATION

(11) **EP 0 455 235 B1**
(45) Date of publication and mention of the grant of the patent: **05.07.1995**
(21) Application number: 91107043.1
(22) Date of filing: 30.04.1991
(51) Int. Cl.: C03B 33/027

(54) **A machine for cutting sheet glass**
Maschine zum Schneiden von Glasscheiben
Machine pour couper des feuilles de verre

(30) Priority: 03.05.1990 IT 6733090
(43) Date of publication of application: 06.11.1991
(73) Proprietor: BOTTERO S.p.A., I-12010 Cuneo (IT)
(72) Inventor: Aimar, Giacomo, 12010 Cervasca (IT)
(74) Representative: Jorio, Paolo, Dr. Ing.

(56) References cited:
- DE-A- 2 340 619
- DE-A- 2 529 625
- GB-A- 2 141 424
- US-A- 4 187 755

## Description

The present invention relates to a machine for cutting sheet glass, provided with at least one movable cutter tool which is adapted to scribe an incision line on a surface of the sheet, and snapping means for breaking the sheet along the said incision line.

As described for instance in the US Patent No. 4,187,755, machines of this type normally comprise a support table of substantially rectangular form for supporting the sheet, and a bridge movable longitudinally of the table, which is adapted to support the cutter tool; moreover such machines normally include at least a pair of guides fixed to the machine frame, to support the movable bridge and guide it during its movement in the longitudinal direction. The known machines also comprise least one pair of racks, also fixed to the machine frame, and extending in the said longitudinal direction, and a corresponding toothed sprocket meshing with each of these racks. These two sprockets are connected to a shaft the axis of which lies parallel to the axis of the said bridge and which is driven to rotate by an electric motor via a suitable transmission, normally a belt type transmission.

In machines of this type the first-mentioned guides and racks are disposed on respective sides of the table and each forms a mechanical unit which projects laterally from the table over the entire length of a lateral edge of the table itself. In fact, since the common axis of the said sprockets which mesh with each rack is positioned above the plane of the support table, each rack must be disposed with its teeth facing upwardly and must be located laterally of the table for the purpose of being able to mesh with the associated toothed sprocket. Moreover, each of the guides of the table are disposed to one side of a corresponding rack for the purpose of allowing suitable guide rollers to be supported on it, which rollers are rotatable on a pair of vertical plates which form part of the said bridge.

Machines of the type briefly described have several disadvantages.

First of all, they do not facilitate the sheet snapping operation in which the sheet is broken into a plurality of sheet portions after it has been scored. In fact, the snapping operation is normally effected either by the utilisation of suitable snapping bars which are movable vertically within suitable grooves of the table, or else by manual action which is effected, the sheet being positioned on the table in such a way as to bring a score line into register with one of the edges of the table itself, by exerting on the portion of the sheet which is to be separated, and which projects over the edge itself, a suitable force tending to make it rotate about the edge itself. This second snapping technique is very limited in machines of the type described since the only edge of the table which can be utilised for effecting manual snapping is the front edge of the table, corresponding to one of the shorter sides. In fact the longer edges of the table cannot be utilised for this purpose since, as previously indicated, each of these edges has a projecting assembly of members substantially comprising a rack and a guide. Therefore, whenever the operator has to effect a manual snapping operation in the manner described above, it is only possible to dispose one of the snap lines over the front edge of the table, whilst the longitudinal edges, of much greater length, are absolutely unusable for this purpose; therefore, if a series of manual breaks have to be made it is necessary continuously to displace the sheet on the table by imparting to it rather large translations and rotations and, in any case, the edge of the table which is available for this purpose is of very short length which can be less than the length of the break line along which it is desired to snap the sheet.

Consequently, the time taken to break a sheet, in particular when this must be cut into portions having small surfaces, can be extremely long and the cut edges of each portion may not be perfectly regular.

Moreover, with machines of the type described, during the snapping operations, small fragments of glass can easily get into the spaces between the teeth of the rack with the consequence that high stresses are extended on the teeth of the rack and the sprocket, increasing friction in the movement of the bridge and, above all, causing a very marked wear in the rack and pinion; as a consequence of this wear errors can be produced in the displacements of the bridge, and therefore, dimensional errors can be introduced during the sheet cutting operation.

If one of the elements of each rack and pinion is made of a plastics material it can also cause breakage of the teeth of this element.

The object of the present invention is that of providing a machine for cutting a sheet of glass, of the type briefly described, in which the disadvantages which have been mentioned above are eliminated.

It is therefore a primary object of the present invention to provide a machine by means of which it is possible to perform manual sheet snapping operations in a simple and rapid manner with very reduced displacements and rotations of the sheet itself; it is another object of the present invention to provide a machine in which abnormal stresses and wear, caused by particles of glass which have entered between the teeth of each rack and pinion are avoided, in such a way as to increase the life of the machine and conserve the initial scribing precision in all conditions of use.

These objects are achieved by a glass sheet cutting machine provided with at least one movable scribing tool operable to scribe score lines on a surface of the sheet, and means for snapping the sheet along the said scribed lines, the said machine comprising a substantially rectangular support table for supporting the said sheet, a bridge movable in a longitudinal direction of the said table and operable to support the said scribing tool, at least one guide fixed to a machine frame, operable to support the said movable bridge and to guide it during its movement in the said direction, at least one rack and pinion, the rack of which is fixed to the said machine frame and the pinion of which is supported from the said bridge and is rotatable on it under the control of a motor, characterised by the fact that the said guide and the said rack are disposed beneath the said support table in such a way that the space on the outside of a vertical plane passing through each longitudinal edge of the said table is completely free for the purpose of being able to rotate a portion of the said sheet in the said space during the snapping of the portion itself.

For a better understanding of the machine of the present invention a description of one embodiment will now be given by way of example, with reference to the attached drawings, in which:

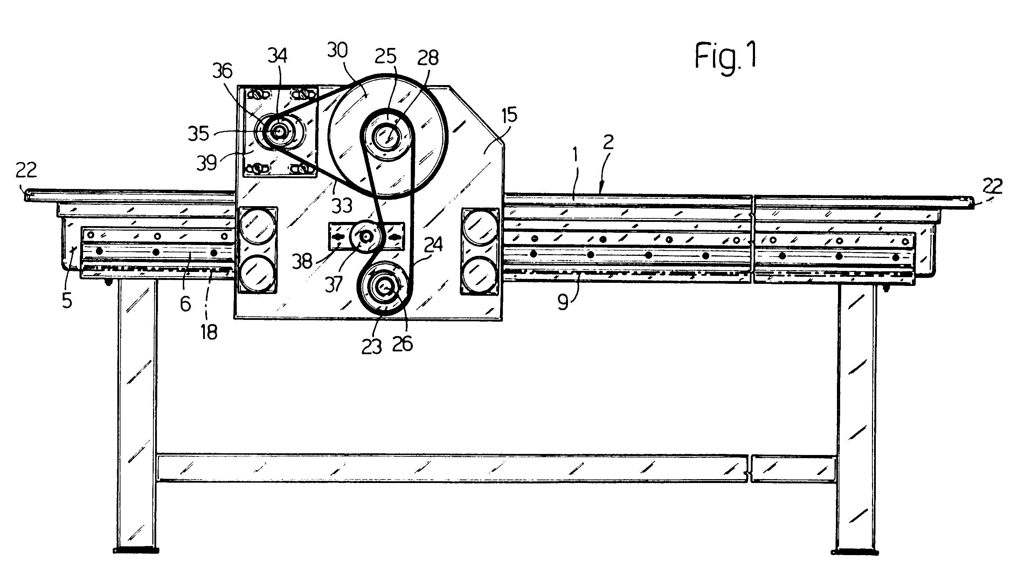

Figures 1 and 2 are respectively side and plan views of the machine;
Figure 3 is a side view of the bridge with which the machine is provided, shown enlarged from the dimensions of Figure 1;
Figures 4 and 5 are transverse sections through the machine of Figure 3, taken on the lines IV-IV and V-V respectively;
Figure 6 is a schematic transverse section of a part of the machine during a manual glass sheet snapping operation.

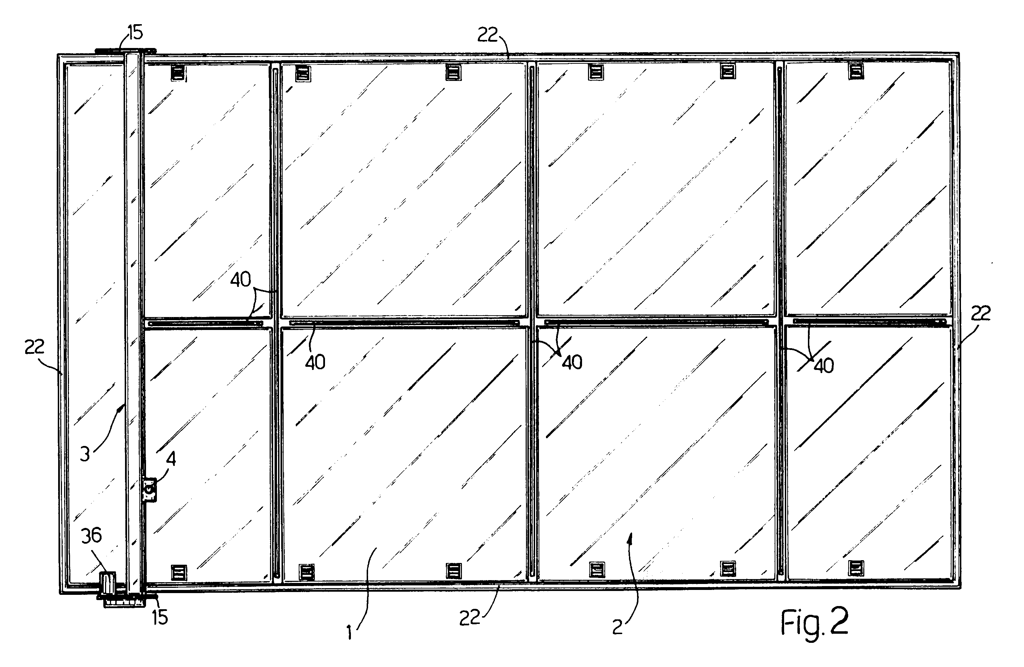

The glass sheet cutting machine of the invention substantially comprises a support table 1 of substantially rectangular form on the upper surface 2 of which a sheet of glass (not shown) can be supported. A bridge 3 is movable longitudinally with respect to the table 1, which bridge is adapted to support a scribing tool 4 (Figure 2) which is brought into contact with the upper surface of the sheet to scribe on it suitable incision lines; the tool can rotate about a vertical axis and translate with respect to the bridge which is movable longitudinally on the table.

The machine comprises a frame of which only two longitudinal beams 5 are shown in the drawings, on which the table 1 is supported; this can be provided with means (not shown) adapted to allow the rotation of the table itself with respect to the frame for the purpose of allowing the glass sheet to be loaded onto the table when this is in a substantially vertical position and subsequently to carry it by rotation into the working position.

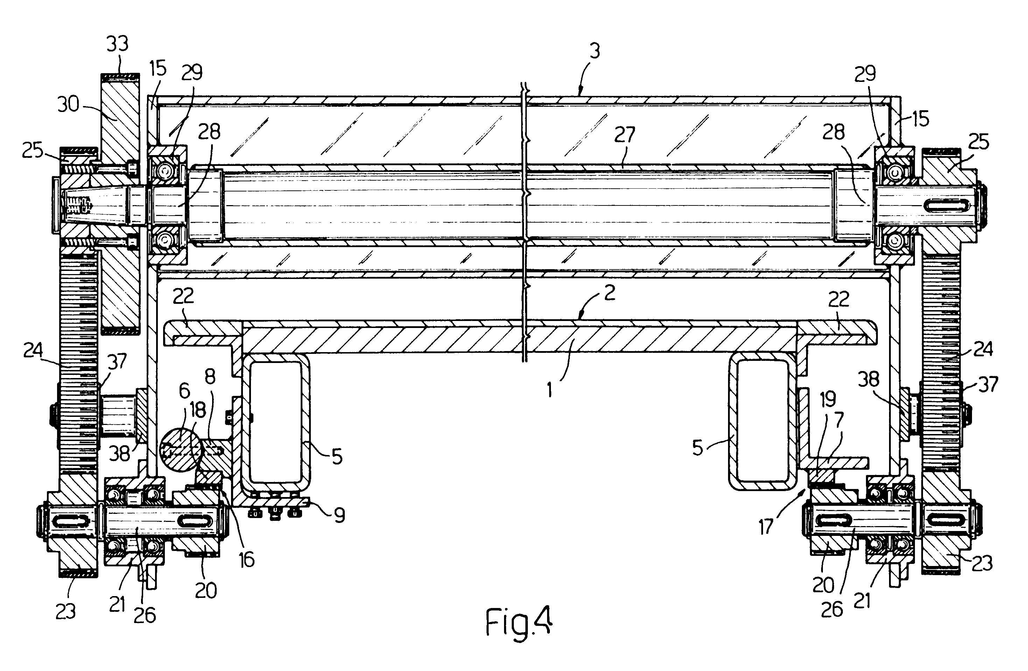

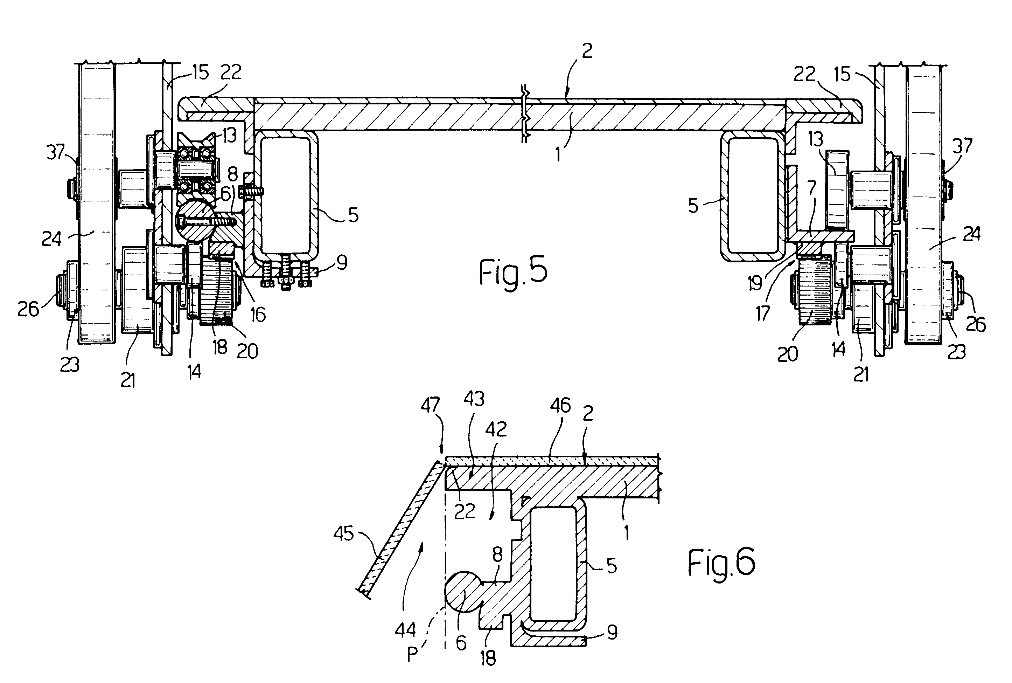

The machine further includes a pair of guides 6 and 7 each of which is fixed to one of the beams 5 and is adapted substantially to support the movable bridge 3 and to guide it during its movement in the said longitudinal direction. Conveniently, as is clearly seen in the sections of Figures 4 and 5, the guide 6 is constituted by a bar or circular cross section, whilst the guide 7 is constituted by a substantially L-shape section. Further, the first guide is fixed to the associated beam 5 with the interposition of a support element 8 of elongate form and an angle section 9, whilst the second guide is fixed to the associated longheron 5 by connecting directly to this the other limb of the L-section from which the guide 7 extends. Conveniently the relative positions of this latter angle section and the angle section 9 with respect to the associated beams 5 can be adjusted by means of screws of type known per se.

On each of the guides 6 and 7 rests a pair of upper rollers 13 and lower rollers 14 rotatable on suitable pins carried by a corresponding vertical plate 15 fixed to the bridge 3; conveniently rolling element bearings are interposed between each roller 13 and 14 and the corresponding pin as is clearly seen in figure 5.

The machine is provided with two rack and pinion assemblies 16,17, each of which comprises a rack 18,19 fixed to one of beams 5; the rack 18 is fixed to the associated beam with the interposition of the support element 8, whilst the rack 19 is fixed directly to the guide 7 in turn fixed to the beam 5. Each pinion 20 of the rack and pinion 16, 17 is rotatable on a corresponding vertical plate 15 (Figure 4) and is supported on it by means of a bush 21 containing a pair of rolling element bearings. As is clearly seen from Figure 4, each vertical plate 15 is disposed parallel to one of the longer sides 22 of the table 1 and at a short distance from its edge. Each pinion 20 is fixed to a pulley 23 which is carried into rotation by a transmission belt 24 driven by a pulley 25 also rotatable on the associated vertical plate 15. For this purpose each pinion 20 is connected to the pulley 23 by means of a short spindle 26 supported by the rolling element bearing of the bush 21, whilst the two pulleys 25, disposed on opposite sides of the machine, are rigidly connected to one another by means of a shaft 27 the axis of which lies parallel to the axis of the bridge 3; as is clearly seen in figure 4, the shaft 27 is conveniently formed by means of a tubular element the ends of which are connected to a corresponding pin 28; this latter is supported by a rolling element bearing 29 housed in a suitable seat of a vertical plate 15 and is connected in any convenient manner to one of the pulleys 25.

The shaft 27 is driven to rotate by a further pulley 30 fixed to one of the pins 28; over this pulley passes a further transmission belt 33 which also passes over a pulley 34 fixed to the shaft 35 of an electric drive motor 36 (Figure 2).

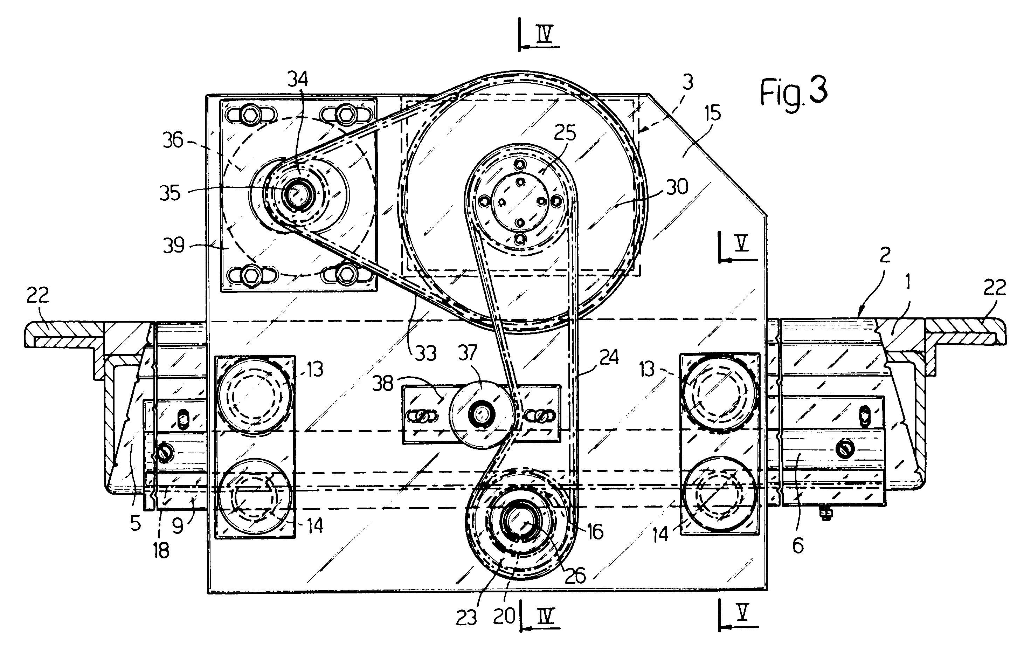

Conveniently, suitable tensioner members can be provided for varying the tension in the belts 24 and 33: a roller 37 rotatable on a block 38, the position of which is adjustable with respect to the vertical plate 15, serves for adjusting the tension of the belt 24; the electric motor 36 is fixed to a small plate 39 (Figure 3) the position of which is also adjustable with respect to the associated vertical plate 15 to allow variation of the tension of the belt 33.

The support table 1 may conveniently be provided with snapping bars 40 (Figure 2), each of which is housed in a corresponding groove in the table itself and is movable vertically with respect to it in such a way as to project by a predetermined amount from the upper surface 2 of the table itself to snap the glass sheet in a manner well known per se.

As is clearly seen from Figures 4 and 5 each assembly constituted by the guide 6 (or the guide 7) and the associated rack 18, 19 is disposed beneath the table 1 and is located in a space 42 which is screened from above by a portion 43 of the table itself. Therefore as is clearly seen from the schematic illustration of Figure 6, the space 44 on one side of a vertical plane P which passes through each longitudinal edge 22 of the table is completely free for the purpose for being able to rotate a portion 45 of a sheet of glass 46 lying on the table 1 in the space itself in a manner which will be described.

Although the said assembly constituted by the guides 6 and 7 and by the associated rack 18, 19 can be disposed in any position beneath the table 2, conveniently the guide 6 is disposed in such a way as to be substantially tangential to the vertical plane P defined above, as is shown in Figures 6.

The function and use of the machine described is as follows:
A sheet of glass 46 (Figure 6) is disposed on the surface 2 of the table 1; the scribing tool 14 is brought into contact with the upper surface of the table and the electric drive motor 36 is activated to cause translation of the bridge 3 in the longitudinal direction and, simultaneously, to activate the means which allow transverse displacement of the scribing tool 4 on the bridge itself. The motor 36 drives the pulley 34 to rotate, which, through the belt 33, drives the pulley 30 to rotate and to drive the rotation of the shaft 27; in this way the pulleys 25 are both driven to rotate and each, through the associated transmission belt 24, drives the pulley 23 and, therefore the pinion 20: this, by meshing with the rack 18, 19, which is fixed with respect to the machine frame, causes longitudinal displacement of the bridge 3.

After the incision lines necessary to define the various portions into which the sheet is to be cut have been scribed on the sheet 46, each of these incision lines can be brought into correspondence with one of the snapping bars 40 and, subsequently, displacement of this bar controlled so as to snap the sheet along the said incision line. When, on the other hand, the snapping is to be effected manually, the sheet 46 is brought into the position shown in figure 6, in which one of the incision lines 47 is disposed substantially in correspondence with the plane P which contains one of the longitudinal edges 22 of the table 2; by subsequently exerting a suitable force on the portion 45 of the sheet which is to be separated from the remaining part, a fracture line along the incision line 47 is created as has been shown in Figure 6. This is possible due to the fact that the portion 45 of the sheet can be made to rotate in the space 44 on one side of the plane P until the required breaking takes place.

Therefore, with the machine of the invention it is possible to perform manual snapping in a simple and rapid manner since it is sufficient to translate and rotate the sheet 46 in such a way as to locate one of the break lines in correspondence with one or other of the longitudinal edges 22, or in correspondence with the front edge of the table 1 and to proceed in the manner which has been described above.

Moreover it has been found that each portion of the Table 43 which lies above the assembly constituted by the guide 6 or 7 and the associated rack 18, 19 constitutes a screening element for the space 42 thereby substantially preventing particles of glass which are formed during the snapping operation from falling into this space: in this way the glass particles are prevented from entering between the teeth of the rack or the associated pinions 20; moreover, any possible particles which, despite this screeming action, still become introduced between the teeth themselves, can be easily removed from the spaces between the teeth of the rack due to the fact that these teeth face downwardly.

It has thus been found that, because of this screeming action, wear or breakage of the teeth is not caused and the initial precision of the machine in scribing incision lines on the sheet is preserved substantially unchanged for the whole of the life of the machine itself.

It will be apparent that the embodiment of the present invention described can have modifications and variations introduced thereto without departing from the ambit of the invention itself.

In particular each assembly constituted by a guide 6 or 7 and the associated rack 18, 19 can have a different structure from that described and each of these members may be fixed in a different way to the machine frame; moreover, a single rack and pinion assembly may be provided for controlling the translation of the bridge 3, or a different transmission may be used for transmitting motion from the motor to the rack and pinion.

## Claims

1. A machine for cutting a glass sheet, provided with at least one movable scribe tool (4) for making incision lines on a surface of the sheet, and snapping means for snapping the sheet along the said incision lines, the said machine comprising a substantially rectangular support table (1) for supporting the said sheet, a bridge (3) movable in a longitudinal direction with respect to the said table and adapted to support the said scribe tool, at least one guide (6,7) fixed to a machine frame, adapted to support the said movable bridge and to guide it during its movement in the said direction, at least one rack and pinion (16, 17) the rack (18, 19) of which is fixed to the said machine frame and the pinion (20) of which is supported from the said bridge and is rotatable on it under the control of a motor (36), characterised by the fact that the said guide (6, 7) and the said rack (18, 19) are disposed beneath the said support table (1) in such a way that the space (44) on the outside of the vertical plane (P) passing through each longitudinal edge (22) of the said table is completely free for the purpose of allowing a portion (45) of the said sheet to rotate in the said space during snapping of the portion itself.

2. The machine according to claim 1, characterised by the fact that the said pinion (20) is supported by a vertical plate (15) fixed to the said bridge and disposed parallel to one of the said longitudinal edges (22) of the said support table and at a short distance from it.

3. The machine according to claim 1 or claim 2, characterised by the fact that it includes two racks (18, 19) each of which is disposed with its teeth facing downwardly, each of the said pinions (20) being disposed beneath the associated rack.

4. A machine according to any preceding claim, characterised by the fact that each of the said guides (6, 7) comprises a bar having an axis disposed in the said longitudinal direction, a pair of rotatable rollers (13, 14) carried by the corresponding vertical plate (15) resting on the said bar.

5. A machine according to any preceding claim, characterised by the fact that the said machine frame includes a pair of longitudinal beams (5) adapted to support the said table, one of said bars (6, 7) and one of the said racks (18, 19) being fixed to each of the said beams.

6. A machine according to claim 5 characterised by the fact that the first (6) of the said bars has a circular cross section and a second (7) of the said bars has a rectangular cross section, the said first bar being fixed to a support element (8) which is fixed to a corresponding beam (5) and to which one of the said racks (18) is fixed.

7. A machine according to any preceding claim, characterised by the fact that each of the said pinions (20) is fixed to a first pulley (23) driven to rotate by a transmission belt (24) driven by a second pulley (25) rotatable on a corresponding vertical plate (15), the said second pulleys (25) being rigidly connected to one another by means of a shaft (27) the axis of which is parallel to that of the said bridge (3).

8. A machine according to any preceding claim, characterised by the fact that one of the said second pulleys (25) is driven to rotate by a transmission belt (33) which passes over a pulley (34) fixed to the shaft (35) of an electric motor (36) supported by one of the said vertical plates (15).

## Patentansprüche

1. Maschine zum Schneiden von Glasscheiben mit wenigstens einem bewegbaren Anreißwerkzeug (4) zum Setzen von Schnittlinien auf einer Oberfläche der Scheibe und Trennmitteln zum Trennen der Scheibe entlang der Schnittlinien, wobei die Maschine einen im wesentlichen rechteckigen Auflagetisch (1) zum Stützen der Glasscheibe, eine in Längsrichtung in bezug auf den Tisch bewegbare und zum Halten des Anreißwerkzeuges eingerichtete Brücke (3), wenigstens eine an einem Maschinenrahmen angebrachte, zum Halten der bewegbaren Brücke und deren Führung während ihrer Bewegung in der betreffenden Richtung eingerichtete Führung (6, 7) und wenigstens eine Zahnstange und ein Ritzel (16, 17) aufweist, wobei die Zahnstange (18, 19) an dem Maschinenrahmen angebracht ist und das Ritzel (20) von der Brücke gehalten und daran drehbar unter Steuerung durch einen Motor (36) gelagert ist**, dadurch gekennzeichnet**, daß die Führung (6, 7) und die Zahnstange (18, 19) unterhalb des Auflagetisches (1) in einer Art und Weise angeordnet sind, daß der Raum (44) auf der Außenseite einer durch jede Längskante (22) des Tisches durchlaufenden Vertikalebene (P) vollständig frei ist, um einen Abschnitt (45) der Scheibe während des Trennens dieses Abschnittes in den Raum drehen zu können.

2. Maschine nach Anspruch 1, dadurch gekennzeichnet, daß das Ritzel (20) von einem Stehblech (15) gehalten ist, das an der Brücke angebracht und parallel zu einer der Längskanten (22) des Auflagetisches und in einem kurzen Abstand davon angeordnet ist.

3. Maschine nach Anspruch 1 oder Anspruch 2, dadurch gekennzeichnet, daß sie zwei Zahnstangen (18, 19) aufweist, von denen jede mit nach unten weisenden Zähnen angeordnet ist und jedes Ritzel (20) unterhalb der zugeordneten Zahnstange angeordnet ist.

4. Maschine nach einem der vorstehenden Ansprüche, dadurch gekennzeichnet, daß jede der Führungen (6, 7) eine Stange mit einer in der Längsrichtung ausgerichtete Achse sowie ein Paar von drehbaren Rollen (13, 14) aufweist, die durch das zugehörige, auf der Stange ruhende Stehblech (15) gehalten ist.

5. Maschine nach einem der vorstehenden Ansprüche, dadurch gekennzeichnet, daß der Maschinenrahmen ein Paar von zum Stützen des Tisches eingerichtete Längsträger (5) aufweist, wobei eine der Stangen (6, 7) und eine der Zahnstangen (18, 19) an jeweils einem der Träger angebracht sind.

6. Maschine nach Anspruch 5, dadurch gekennzeichnet, daß die erste (6) der Stangen einen kreisförmigen Querschnitt und die zweite (7) der Stangen einen rechtwinkligen Querschnitt aufweist, wobei die erste Stange an einem Trägerelement (8) angebracht ist, das an einem zugehörigen Träger (5) angebracht und an dem eine der Zahnstangen (18) befestigt ist.

7. Maschine nach einem der vorstehenden Ansprüche, dadurch gekennzeichnet, daß jedes der Ritzel (20) an einer ersten Riemenscheibe (23) angebracht ist, die über einen Transmissionsriemen (24) durch eine zweite Riemenscheibe (25) angetrieben drehbar an einem zugehörigen Stehblech (15) angebracht ist, wobei die zweiten Riemenscheiben (25) starr miteinander mittels einer Welle (27) verbunden sind, deren Achse parallel zu der der Brücke (3) verläuft.

8. Maschine nach einem der vorstehenden Ansprüche, dadurch gekennzeichnet, daß eine der zweiten Riemenscheiben (25) mittels eines Transmissionsriemens (33) zur Drehung angetrieben ist, der um eine Riemenscheibe (34) umläuft, die an der Welle (35) eines durch eines der Stehbleche (15) gehaltenen Elektromotors (36) angebracht ist.

## Revendications

1. Machine pour couper une feuille de verre, pourvue d'au moins un outil de traçage mobile (4) pour faire des lignes d'incision sur une surface de la feuille, et des moyens de rupture pour rompre la feuille le long desdites lignes d'incision, ladite machine comprenant une table de support (1) globalement rectangulaire pour soutenir ladite feuille, un pont (3) mobile dans une direction longitudinale par rapport à ladite table et adapté à soutenir ledit outil de traçage, au moins un guide (6,7) fixé à un châssis de la machine, adapté à soutenir ledit pont mobile et à le guider durant son mouvement dans ladite direction, au moins un ensemble crémaillère et pignon (16,17) dont la crémaillère (18,19) est fixée audit châssis de la machine et dont le pignon (20) est soutenu à partir dudit pont et est susceptible de tourner sur celui-ci sous la commande d'un moteur (36), caractérisée en ce que ledit guide (6,7) et ladite crémaillère (18,19) sont disposés en dessous de ladite table de support (1) d'une manière telle que l'espace (44) sur l'extérieur du plan vertical (P) passant par chaque bord longitudinal (22) de ladite table est complètement libre dans le but de permettre à une portion (45) de ladite feuille de pivoter dans ledit espace durant la rupture de la portion elle-même.

2. Machine selon la revendication 1, caractérisée en ce que ledit pignon (20) est soutenu par une plaque verticale (15) fixée audit pont et disposée parallèle à l'un desdits bords longitudinaux (22) de ladite table de support et à une courte distance de lui.

3. Machine selon la revendication 1 ou 2, caractérisée en ce qu'elle comprend deux crémaillères (18,19) chacune d'entre elles étant disposée avec ses dents dirigées vers le bas, chacun desdits pignons (20) étant disposés en dessous de la crémaillère associée.

4. Machine selon l'une quelconque des revendications précédentes, caractérisée en ce que chacun desdits guides (6,7) comprend une barre ayant un axe disposé dans ladite direction longitudinale, une paire de galets susceptibles de tourner (13,14) portés par la plaque verticale correspondante (15) reposant sur ladite barre.

5. Machine selon l'une quelconque des revendications précédentes, caractérisée en ce que ledit châssis de machine comprend une paire de poutrelles longitudinales (5) adaptées à soutenir ladite table, l'une desdites barres (6,7) et l'une desdites crémaillères (18,19) étant fixées à chacune desdites poutrelles.

6. Machine selon la revendication 5, caractérisée en ce que la première (6) desdites barres a une section en coupe circulaire et une seconde (7) desdites barres a une section en coupe rectangulaire, ladite première barre étant fixée à un élément support (8) qui est fixé à une poutrelle correspondante (5) et auquel une desdites crémaillère (18) est fixée.

7. Machine selon l'une quelconque des revendications précédentes, caractérisée en ce que chacun desdits pignons (20) est fixé à une première poulie (23) pilotée pour tourner par une courroie de transmission (24) pilotée par une seconde poulie (25) adaptée à tourner sur une plaque verticale correspondante (15), lesdites secondes poulies (25) étant reliées rigidement l'une à l'autre au moyen d'un arbre (27) dont l'axe est parallèle à celui dudit pont (3).

8. Machine selon l'une quelconque des revendications précédentes, caractérisée en ce que l'une desdites secondes poulies (25) est pilotée pour tourner par une courroie de transmission (33) qui passe sur une poulie (34) fixée à l'arbre (35) d'un moteur électrique (36) supporté par l'une desdites plaques verticales (15).
